# EUROPEAN PATENT APPLICATION

(11) **EP 4 654 286 A1**
(43) Date of publication of application: **26.11.2025**
(21) Application number: 24223281.7
(22) Date of filing: 25.12.2024
(51) Int. Cl.: H01M 4/1395, C01B 33/00, H01M 4/38, H01M 10/052, H01M 4/02

(54) **MATERIALS FOR USE IN BATTERIES AND METHODS OF MANUFACTURING THE SAME, AND BATTERIES**

(30) Priority: 21.05.2024 CN 202410631808
(71) Applicant: Mobile Assets Limited, Hung Hom Kln, Hong Kong (HK); Lau, Lee Cheung, Hung Hom Kln, Hong Kong (HK)
(72) Inventor: Lee, Pui Kit, HONG KONG (HK); Tan, Tian, HONG KONG (HK); Hu, Weichen, HONG KONG (HK); Lau, Lee Cheung, HONG KONG (HK); Lau, Pui Kit Max, HONG KONG (HK)
(74) Representative: Gong, Jinping

(57) **Abstract**

The present disclosure discloses a material for use in a battery, a method of manufacturing the material, and a battery. The material comprises: an active material configured to undergo a chemical reaction during charging and/or discharging of the battery; and one or more metal atoms configured to hold one or more oxygen atoms of the active material and to inactivate one or more oxygen atoms of the active material during charging and/or discharging of the battery. The material enables the anode of the battery to have higher Coulombic efficiency.

## Description

### TECHNICAL FIELD OF THE DISCLOSURE

The present disclosure relates to materials for use in batteries and methods of manufacturing the same, and batteries.

### BACKGROUND OF THE DISCLOSURE

Existing structures and geometries of certain rechargeable battery electrodes involve using an aluminum foil coated with an active material as a cathode and using a copper foil coated with an active material as an anode. In order for a battery to achieve higher energy density, it is necessary to use a high-capacity anode material (for example, silicon). During the lithiation process, the formation of a lithium-silicon alloy by lithium and silicon results in a volume expansion of up to 400%, which leads to fracture and deterioration of the electrode structure. This is one of the main obstacles to increasing the energy density of certain rechargeable batteries, such as lithium-ion batteries.

Lithium-ion batteries (LIBs) can be used in many portable electronics, power tools, and electric and internal-combustion engine vehicles, among others. Generally, an LIB can be composed of a lithium-containing cathode material and a lithium-acceptable anode material. During charging, lithium ions migrate from the cathode to the anode. During discharging, some of the lithium ions return to the cathode. Coulombic efficiency is defined as the ratio of the number of lithium ions removed during discharging to the number of lithium ions transferred to the anode during charging over a full cycle.

LIBs have been the main option in applications of renewable energy batteries so far and need to have a considerable energy storage system. However, the materials used in LIBs today typically have low storage capacity, so only a small amount of energy can be stored through each charging, resulting in unsatisfactory battery performance.

CN105399100A discloses a method for preparing nanoporous silicon. Alloying silicon and magnesium powders generates the composite Mg₂Si/Mg as a precursor, and dealloying the product by pickling it with an acid. During the pickling process, however, water molecules inevitably react with elemental silicon and irreversibly oxidize it. During charging, the silicon oxide and lithium ions form irreversible products, which negatively affects Coulombic efficiency.

To address the low Coulombic efficiency caused by silicon oxide, CN114597375A proposes a method that reduces silicon oxide with highly inert metal elements (such as silver, copper, nickel, iron, and cobalt). This method decreases the degree of oxidation of elemental silicon and thereby improves Coulombic efficiency of the anode made of elemental silicon. However, these inert metals (e.g., silver) are so expensive that they cannot help with the large-scale production and commercialization of elemental silicon as an anode material.

CN115053364A adds zirconium to elemental silicon in order to improve Coulombic efficiency, but achieves little effect, improving Coulombic efficiency by only 2%.

The methods of the three patent applications mentioned above reduce porous or nano-sized elemental silicon using various inert elemental metals, but they are problematic in practical applicability and make it difficult to really improve Coulombic efficiency of silicon.

### SUMMARY OF THE DISCLOSURE

In view of the shortcomings of the prior art, one objective of the present disclosure is to provide a material for use in batteries that has high Coulombic efficiency and is excellent in electrochemical performance. Another objective of the present disclosure is to provide a battery comprising the material. Still another objective of the present disclosure is to provide a method of manufacturing the material.

A first aspect of the present disclosure provides a material for use in a battery, comprising:
an active material configured to undergo a chemical reaction during charging and/or discharging of the battery; and
one or more metal atoms configured to hold one or more oxygen atoms of the active material and to inactivate one or more oxygen atoms of the active material during charging and/or discharging of the battery.

In the material according to the present disclosure, it is preferable that the metal atom and the active material form a complex.

In the material according to the present disclosure, it is preferable that the metal atom is configured to be bound, inside the complex, with an oxygen atom on a surface of the active material.

In the material according to the present disclosure, it is preferable that the metal atom is bound with the oxygen atom on the surface of the active material by a covalent bond.

In the material according to the present disclosure, it is preferable that the metal atom remains bound with the oxygen atom during charging and/or discharging of the battery.

In the material according to the present disclosure, it is preferable that the metal atom reacts with the oxygen atom to form an oxide inside the complex.

In the material according to the present disclosure, it is preferable that the oxide forms at least one of an amorphous material and a polycrystalline material.

In the material according to the present disclosure, it is preferable that Coulombic efficiency of the material is improved by the metal atom holding and inactivating the oxygen atom.

In the material according to the present disclosure, it is preferable that the metal atom is selected from one or more of Na, K, Rb, Cs, Ca, Al, Mg, Sr, Sc, Y, Zr, Ti, La, Ce, and Hf atoms.

In the material according to the present disclosure, it is preferable that the metal atom is intercalated in the active material and thereby holds and inactivates the oxygen atom.

In the material according to the present disclosure, it is preferable that the metal atom is intercalated in the active material in at least one of the following forms: an elemental metal, a metal oxide, a metal hydroxide, a metal acetate, a metal nitrate, a metal sulfate, and a metal carbonate.

In the material according to the present disclosure, it is preferable that the active material is selected from one or more of a metalloid, an oxide of a metalloid, a metal, and an oxide of a metal.

In the material according to the present disclosure, it is preferable that the metalloid is Si and/or B.

In the material according to the present disclosure, it is preferable that the active material is Si and includes at least one of SiOₓ and SiO₂, where 0 < x < 2.

In the material according to the present disclosure, it is preferable that the active material is granular and has a particle diameter of 5 nm to 5 mm.

In the material according to the present disclosure, it is preferable that the active material is used as an anode material in the battery.

A second aspect of the present disclosure provides a battery, comprising a cathode, an anode formed of the material described above, and an electrolyte in ionic communication with the anode and the cathode.

In the battery according to the present disclosure, it is preferable that a metal ion of the cathode is transferred to the anode during charging of the battery, and the metal ion is transferred back to the cathode during discharging of the battery.

In the battery according to the present disclosure, it is preferable that the metal ion is not captured by an oxygen atom in the anode during discharging of the battery.

In the battery according to the present disclosure, it is preferable that the metal ion is selected from one or more of Li, Na, K, Ca, and Mg ions.

A third aspect of the present disclosure provides a method of manufacturing the material for use in a battery described above, comprising:
preloading an active material with one or more metal atoms, wherein the active material is configured to undergo a chemical reaction during charging and/or discharging of the battery, and wherein the metal atom is configured to hold one or more oxygen atoms on a surface of the active material and to inactivate one or more oxygen atoms on a surface of the active material.

In the method according to the present disclosure, it is preferable that preloading the active material with the metal atom comprises:
annealing the active material and a material containing the metal atom in at least one atmosphere selected from helium, nitrogen, and argon, and at an annealing temperature of 500 °C to 1200 °C.

In the method according to the present disclosure, it is preferable that Coulombic efficiency of the battery is improved when the annealing temperature is increased.

In the method according to the present disclosure, it is preferable that preloading the active material with the metal atom comprises:
subjecting the active material and a material containing the metal atom to high-energy ball milling to mix the active material and the material containing the metal atom, and subjecting the active material and the material containing the metal atom to heat treatment in at least one atmosphere selected from helium, nitrogen, and argon.

### BRIEF SUMMARY OF THE DRAWINGS

Fig. 1 is a SEM image of the porous silicon particles obtained from Example 1.
Fig. 2 is a diagram showing the pore size distribution of the porous silicon particles obtained from Example 1.
Fig. 3 is an X-ray diffraction pattern of the material for use in a battery that was obtained from Example 1.
Fig. 4 is an X-ray diffraction pattern of the material for use in a battery that was obtained from Example 2.
Fig. 5 is an X-ray diffraction pattern of the material for use in a battery that was obtained from Example 3.

### DETAIL DESCRIPTION OF THE DISCLOSURE

As the inventors have discovered through research, trials, and experiments, metalloids and metalloid oxides, such as silicon-based materials, are potential high-capacity anodes for LIBs. However, metalloid (e.g., Si) particles having a high surface area are reactive. A metalloid that enters the lattice after the battery is charged can react with the electrolyte, generating, for example LiₓSi, and capturing lithium inside the material, thereby reducing the overall reversibility of lithium intercalation and deintercalation.

Lithium ions (Li⁺) can be stored by reacting with Si during charging and are released during discharging. Ideally, Coulombic efficiency of the anode should be close to 100%, meaning that the amount of lithium ions reaching the anode should be equal to the amount of lithium ions being removed. If lithium ions are captured at the anode, Coulombic efficiency will be less than 100%. In that case, the available capacity and energy density of the battery, which depends on the amount of reversible lithium ions, will be lower.

As the inventors have discovered, oxygen atoms on the surface of an anode material negatively affect the charging-discharging process. In particular, some of the oxygen atoms inactivate Si. This reduces the overall amount of Li ions that can be intercalated and thus decreases the capability of the anode to store lithium ions. During the lithiation process (i.e., the charging process), some of the oxygen atoms also react with lithium ions and form irreversible products where Li ions are captured, thereby reducing the reversibility of Li ions (which is known as the first Coulombic efficiency of a material). Part of oxygen dissolves gradually and enters the electrolyte, and thus adversely affects Coulombic efficiency of the anode material. Accordingly, lithium ions are captured mainly by oxygen atoms in the lattice, which negates the benefit of the higher capacity of the active material

### <Material for Use in Battery>

Based on the above discovery, the present disclosure provides a material for use in a battery, comprising an active material configured to undergo a chemical reaction during charging and/or discharging of the battery; and one or more metal atoms configured to hold one or more oxygen atoms on a surface of the active material and to inactivate one or more oxygen atoms on a surface of the active material. The battery of the present disclosure is preferably a lithium-ion battery. This can prevent lithium from being captured by oxygen in the lattice, improving Coulombic efficiency of the material. The active material of the present disclosure can be used as an anode material of a battery.

In the material of the present disclosure, the metal atom and the active material can form a complex. This is beneficial for improving the stability of the material. There are oxygen atoms on the surface of the active material. Inside the complex, the metal atom is bound with the oxygen atom on the surface of the active material. In some embodiments, the metal atom can be bound with the oxygen atom on the surface of the active material by a covalent bond. In some embodiments, the metal atom can be bound with to the oxygen atom on the surface of the active material by a coordinate bond.

According to a preferred technical solution of the present disclosure, the metal atom remains bound with the oxygen atom during charging and/or discharging of the battery. This can effectively avoid or reduce the capture of lithium by oxygen in the lattice. The metal atom can react with the oxygen atom, thereby generating an oxide inside the complex. The oxide of the present disclosure forms an amorphous material and/or a polycrystalline material. Coulombic efficiency of the material is improved by the metal atom holding and inactivating the oxygen atom. Specifically, the mental atom, because of being intercalated in the active metal, holds and inactivates the oxygen atom.

In some embodiments, the active material has on its surface an oxide formed by the active material and oxygen atoms, and at least a part of the oxygen atoms in the oxide combines with a metal. Specifically, at least 50% of the oxygen atoms on the surface of the active material combine with the metal. Preferably, at least 80% of the oxygen atoms on the surface of the active material combine with the metal. More preferably, at least 90% of the oxygen atoms on the surface of the active material combine with the metal. In some embodiments, all the oxygen atoms on the surface of the active material combine with the metal.

The mass ratio of the active material to the metal atom is 10: (0.2-5), preferably 10: (0.5-3), and more preferably 10: (0.8-2). In some embodiments, the mass ratio of the active material to the metal atom is 10: (1-1.2). The mass of an oxide of a metal is taken as the mass of the metal atom.

### Metal Atom

In the present disclosure, the metal atom can be selected from one or more of an alkali metal, an alkaline earth metal, an element in Group IIIA, an element in Group IIIB group, and an element in Group IVB. Examples of the alkali metal include, but are not limited to, Na, K, Rb, and Cs. Preferably, the alkali metal is K. Examples of the alkali earth metal include, but are not limited to, Ca, Mg and Sr. Preferably, the alkali earth metal is Ca. Examples of the element in Group IIIA include, but are not limited to, Al and Ga. Preferably, the element in Group IIIA is Al. Examples of the element in Group IIIB include, but are not limited to, Sc, Y, and a lanthanide element. Examples of the lanthanide element include, but are not limited to, La and Ce. Preferably, the element in Group IIIB is Y Examples of the element in Group IVB include, but are not limited to, Ti and Zr. Preferably, the element in Group IVB is Zr.

According to one embodiment of the present disclosure, the metal atom is a combination of an alkaline earth metal, an alkali metal, and an element in Group IVB. The mass ratio of the alkaline earth metal to the alkali metal and the element in Group IVB can be (0.1-1): (0.1-1): 1, preferably (0.2-0.8): (0.2-0.8): 1, and more preferably (0.3-0.6): (0.3-0.6): 1. The mass of an oxide of each of the elements is taken as the mass of each of the elements.

According to another embodiment of the present disclosure, the metal atom is an element in Group IIIB.

According to still another embodiment of the present disclosure, the metal atom is a combination of an element in Group IIIA and an alkaline metal. The mass ratio of the element in Group IIIA to the alkaline metal can be (0.5-2): 1, preferably (0.8-1.5): 1, and more preferably (1-1.2): 1. The mass of an oxide of each of the elements is taken as the mass of each of the elements.

In the material of the present disclosure, the metal atom is selected from one or more of Na, K, Rb, Cs, Ca, Al, Mg, Sr, Sc, Y, Zr, Ti, La, Ce, and Hf. In some embodiments, the metal atom is selected from one or more of Na, K, Rb, Cs, Ca, Al, Mg, Sr, Sc, Y, Zr, Ti, and La. In a preferred embodiment, the metal atom is selected from one or more of K, Ca, Zr, Al, and Y According to one embodiment of the present disclosure, the metal atom is a combination of K, Ca, and Zr. According to another embodiment of the present disclosure, the metal atom is Y According to still another embodiment of the present disclosure, the metal atom is a combination of K and Al.

In the material of the present disclosure, the mental atom can be supplied by the elemental metal or a compound thereof. The compound of the mental atom is selected from one or more of a metal oxide, a metal hydroxide, a metal acetate, a metal nitrate, a metal sulfate, and a metal carbonate. These substances can be commercial products. In some embodiments, the mental atom is intercalated in the active material in at least one of the following forms: an elemental metal, a metal oxide, a metal hydroxide, a metal acetate, a metal nitrate, a metal sulfate, and a metal carbonate. Preferably, the metal atom is intercalated in the active material in the form of a metal oxide.

### Active Material

In the material of the present disclosure, the active material is preferably a metalloid (Me)-based material. The active material is selected from one or more of a metalloid, an oxide of a metalloid, a metal, and an oxide of a metal. The metalloid is preferably Si and/or B. Examples of the metalloid (Me)-based material include, but are not limited to, a silicon-based material and a boron-based material. In some embodiments, the active material is silicon and includes at least one of SiOₓ and SiO₂, where 0 < x < 2. According to one embodiment of the present disclosure, the active material is a silicon-based material containing SiOₓ, where 0 < x < 2. According to another embodiment of the present disclosure, the active material is a silicon-based material containing SiO₂. According to still another embodiment of the present disclosure, the active material is a silicon-based material containing SiOₓ and SiO₂, where 0 < x < 2.

The active material of the present disclosure is preferably a silicon-based material, and has, on a surface thereof, at least one of SiOₓ (where 0 < x < 2) and SiO₂. According to one embodiment of the present disclosure, the active material is a silicon material having a pore structure inside it and/or on a surface thereof (hereinafter also referred as "porous silicon material").

In the material of the present disclosure, the active material is granular, and has a particle diameter of 5 nm to 5 mm, preferably 500 nm to 50 µm, more preferably 1 to 30 µm, and most preferably 1 to 5 µm. The particle diameter can be determined by a conventional method. As the inventors have discovered, micron-sized active materials are more beneficial in improving Coulombic efficiency of the material.

The silicon-based material of the present disclosure can be porous silicon particles, for example, porous amorphous silicon particles and/or porous polycrystalline silicon particles. The porous silicon particles of the present disclosure preferably have a particle diameter of 500 nm to 50 µm, and more preferably 1 µm to 5 µm. Micron-sized porous silicon particles are beneficial in improving Coulombic efficiency of the material.

The porous silicon particles of the present disclosure can be supplied by a porous silicon material. The porous silicon material can be prepared by alloying magnesium and silicon, followed by vacuum distillation for dealloying. Methods of manufacturing the porous silicon material as well as other related apparatuses and methods are hereinafter described.

The method of manufacturing the porous silicon material of the present disclosure comprises:
(i) placing an alloy material and silicon particles into a furnace, drawing air out of the furnace, and filing the furnace with an inert gas;
(ii) heating the alloy material and the silicon particles to a temperature of 1000 °C to 1300 °C, keeping them at the temperature for a period of 1 h to 6 h, taking out the alloy after it is naturally cooled, and pulverizing the alloy; and
(iii) placing the pulverized alloy into a vacuum furnace, drawing air out of the furnace, raising the temperature of the furnace to 700 °C to 950 °C, and distilling the pulverized alloy under vacuum for dealloying, resulting in a porous silicon material.

In step (i), air in the furnace can be drawn by an air pump. The pressure in the furnace reaches 0.01% of one standard atmosphere. The alloy material can include at least one of zinc, magnesium, calcium, strontium, barium, boron, phosphorus, lithium, and iron. The content of silicon in the alloy material and the silicon particles is about 20 to 99 mol%. The mass ratio of the silicon particles to the alloy material can be 33: (40-90), preferably 33: (50-80), and more preferably 33: (60 to 70). The inert gas can be selected from one or more of nitrogen, argon, helium, and neon. According to one embodiment of the present disclosure, the inert gas is argon.

In step (ii), the temperature is preferably 1100 °C to 1250 °C, and more preferably 1100 °C to 1150 °C. The period is preferably 2 h to 5 h, and more preferably 2 h to 3 h.

In step (iii), all the air in the furnace is drawn by means of a molecular pump. For example, the pressure in the furnace reaches 0.001% of one standard atmosphere. The temperature is preferably 750 °C to 850 °C, and more preferably 800 °C to 830 °C.

The method of manufacturing the porous silicon material is hereinafter described by taking magnesium as the alloy material.
(i) placing magnesium and silicon particles into a furnace, drawing air out of the furnace, and filing the furnace with argon as the inert protective atmosphere;
(ii) heating magnesium and the silicon particles to a temperature of 1000 °C to 1300 °C, keeping them at the temperature for a period of 1 h to 6 h, taking out the magnesium-silicon alloy after it is naturally cooled, and pulverizing the magnesium-silicon alloy; and
(iii) placing the pulverized magnesium-silicon alloy into a vacuum furnace, drawing air out of the furnace, raising the temperature of the furnace to 700°C to 950 °C, and distilling the pulverized alloy under vacuum for dealloying, resulting in a porous silicon material.

The porous silicon material is ground to become porous silicon particles. The method of grinding can be ball milling. The grinding balls used in ball milling can be zirconia balls. The grinding balls can have a diameter of 0.5 cm to 5 cm, and preferably 1 cm to 3 cm. The ratio of the grinding balls to the porous silicon material can be (3-9): 1, preferably (4-8): 1, and more preferably (5-7): 1. The ball milling can be carried out at a rotational speed of 200 rpm to 700 rpm, and 300 rpm to 500 rpm. The ball milling can be carried out for a period of 0.5 h to 5 h, preferably 1 h to 3 h, and more preferably 1.5 h to 2 h.

In some embodiments, the porous silicon material is placed in a zirconia ball-milling tank, zirconia balls are added at a weight ratio of 1: 5-6 (material: ball), and the material is ground at a rotational speed of 300 rpm to 500 rpm for a period of 1.5 h to 2 h, giving porous silicon particles having a particle diameter of 1 µm to 5 µm.

In one broad embodiment, the present disclosure provides an apparatus for producing a porous silicon material from silicon particles, comprising:
(i) means for alloying silicon particles with an alloying material to give an alloy;
(ii) means for casting an alloy sheet, tape or film from the alloy; and
(iii) means for extracting an alloy material from the alloy sheet, tape or film to give a porous silicon material.

In another broad embodiment, the present disclosure provides a method of producing hydrogen, comprising:
(i) alloying at least one of a raw silicon material and a raw aluminum material with an alloying material to give an alloy;
(ii) casting an alloy sheet, tape or film from the alloy;
(iii) distilling the alloy sheet, tape or film to give at least one of a porous silicon sheet, tape or film and a porous aluminum sheet, tape or film; and
(iv) allowing at least one of the porous silicon sheet, tape or film and the porous aluminum sheet, tape or film to interact with a water-containing solution to generate hydrogen.

In step (i), the alloy material can include at least one of zinc, magnesium, calcium, strontium, barium, boron, phosphorus, lithium, and iron. Other impurities in the alloy do not cause the generated hydrogen to vary considerably in performance. Step (i) can produce an alloy comprising silicon in an amount of about 20 mol% to about 99 mol%. Preferably, step (i) can produce an alloy comprising silicon in an amount of about 60 mol%.

In still another broad embodiment, the present disclosure provides a method of preparing at least one of a porous silicon sheet, tape or film and a porous aluminum sheet, tape or film for generating hydrogen through interaction with a water-containing solution, comprising:
(i) alloying at least one of a raw silicon material and a raw aluminum material with an alloying material to give an alloy;
(ii) casting an alloy sheet, tape or film from the alloy; and
(iii) distilling the alloy sheet, tape or film to give at least one of a porous silicon sheet, tape or film and a porous aluminum sheet, tape or film.

The water-containing solution can be alkaline in nature.

In still another broad embodiment, the present disclosure provides a method of producing hydrogen, comprising:
(i) alloying at least one of a raw silicon material and a raw aluminum material with an alloying material to give an alloy;
(ii) casting an alloy sheet, tape or film from the alloy;
(iii) distilling the alloy sheet, tape or film to give at least one of a porous silicon sheet, tape or film and a porous aluminum sheet, tape or film; and
(iv) allowing at least one of the porous silicon sheet, tape or film and the porous aluminum sheet, tape or film to interact with a water-containing solution to generate hydrogen, wherein the water-containing solution is alkaline in nature.

In another broad embodiment, the present disclosure provides an apparatus for producing at least one of a porous silicon sheet, tape or film and a porous aluminum sheet, tape or film, wherein at least one of the porous silicon sheet, tape or film and the porous aluminum sheet, tape or film is configured to generate hydrogen through interaction with a water-containing solution, the apparatus comprising:
(i) means for alloying at least one of a raw silicon material and a raw aluminum material with an alloying material to give an alloy;
(ii) means for casting an alloy sheet, tape or film from the alloy; and
(iii) means for distilling the alloy sheet, tape or film to give at least one of a porous silicon sheet, tape or film and a porous aluminum sheet, tape or film.

In another broad embodiment, the present disclosure provides an apparatus for producing hydrogen, comprising means for allowing at least one of a porous silicon sheet, tape or film and a porous aluminum sheet, tape or film to interact with a water-containing solution to generate hydrogen.

Furthermore, the present disclosure can produce at least one of a porous silicon sheet, tape or film and a porous aluminum sheet, tape or film, by a method comprising:
(i) alloying at least one of a raw silicon material and a raw aluminum material with an alloying material to give an alloy;
(ii) casting an alloy sheet, tape or film from the alloy; and
(iii) distilling the alloy sheet, tape or film to give at least one of the porous silicon sheet, tape or film and the porous aluminum sheet, tape or film.

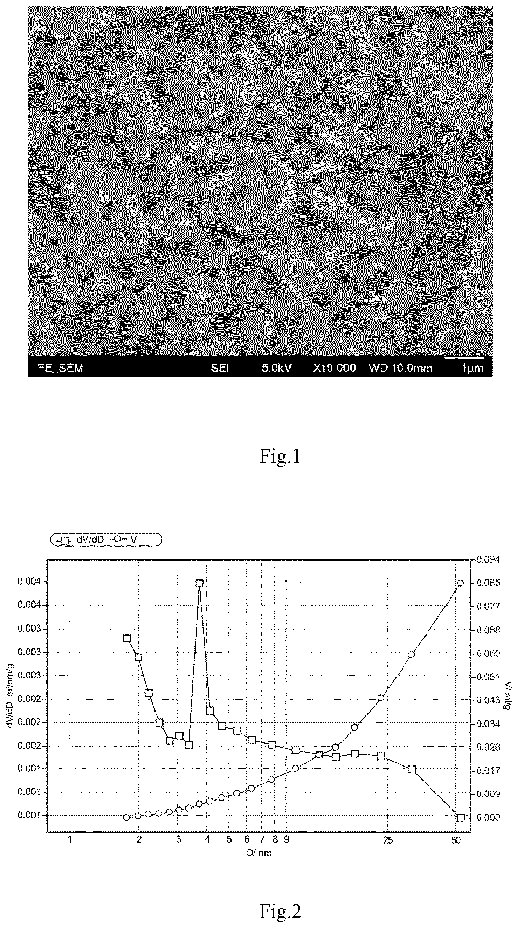

Fig. 1 shows the result of X-ray diffraction measurement of an embodiment of a material of the present disclosure that contains silicon, calcium, potassium, zirconium, and oxygen and is subjected to heat treatment. The material is found to be potassium feldspar.

In some embodiments, the active material is a material configured to accommodate a certain amount of metal ions so as to store electrical energy. For example, the active material can be a porous silicon material prepared by the method described above or an oxide of a metalloid (MeO), a silicon-based material SiOₓ (where 0 < x < 2), and/or a high-capacity silicon-based material having a plurality of sites that receive a certain amount of metal ions (e.g. Na, K, Rb, Cs, Ca, Al, Mg, Sr, Sc, Y, Zr, Ti, La, Ce, and Hf ions) through a suitable chemical reaction between the active material and the metal ions.

During "charging" (through an external current/electron supply), lithium ions are attached to the vacant sites on silicon in the active material, giving a Si/Li alloy, whereby lithium is "intercalated" into the active material. On the other hand, lithium ions are detached from the Si/Li alloy during "discharging" (when the material supplies electrons/current to a connected device). The lithium ions can be supplied by an electrolyte in contact with the active material.

Without being limited by the following examples, the active material can contain one or more metals (e.g., Zn, Ga, In, Sn, Pb, and Bi), one or more metal oxides (e.g., ZnO, Ga₂O₃, Ga₂O, In₂O₃, SnO, SnO₂, PbO, Pb₃O₄, PbO₂, Pb₂O₃, Pb₁₂O₁₉, and Bi₂O₃), one or more alloys of these metals, and/or conversion reaction-based materials of these metals. In battery applications, these materials and metals can react with each other to store or release energy, preferably electrical energy.

During "charging," lithium ions are attached to the metal oxide in the active material and convert the metal oxide into lithium oxide and a lithium-metal alloy, whereby lithium is "intercalated" into the active material. During "discharging," the lithium ions are extracted into the electrolyte and the metal is converted into a metal oxide.

A raw preloading material contains one or more metal atoms with which the active material is preloaded through a treatment process. The precursor of the metal atom is preferably in at least one of the following forms: an elemental metal (A), a metal oxide (A-O), a metal hydroxide (A-OH), a metal acetate (A-CH₃COOH), a metal nitrate (A-NO₃), a metal sulfate (A-SO₄), and a metal carbonate (A-CO₃). The precursor of the metal atom contains one or more metal atoms selected from one or more of Na, K, Rb, Cs, Ca, Al, Mg, Sr, Sc, Y, Zr, Ti, La, Ce, and Hf.

The metal atoms with which the active material is preloaded act as a "binder" of the active material, which binds together individual portions of the active material. The metal atoms can form a complex with the active material, and enable oxygen atoms of the active material to be bound inside the complex.

For example, the empirical formula of the material of the present disclosure can be expressed as A_{y}MeOₓ, where A is one or more metal atoms selected from the group consisting of Na, K, Rb, Cs, Ca, Al, Mg, Sr, Sc, Y, Zr, Ti, La, Ce, and Hf; Me is a metalloid such as Si and B; O is oxygen; 0 < x < 4 and 0 < y < 4. The material of the present disclosure can have a primary particle size of 5 nm to 5 mm.

In particular, the metal atom with which the active material is preloaded can hold the oxygen atoms of SiOₓ (where 0 < x < 2) inside individual portions of the active material and inactivate the oxygen atoms in SiOₓ (0 < x < 2) and SiO₂ inside individual portions of the active material. Each of the metal atoms and each of the oxygen atoms share electron pairs between them and form a covalent bond. Since the metal atoms combine with the oxygen atoms, the metal atoms remain bonded with the oxygen atoms of the active material during charging and/or discharging of the battery.

A detailed description of the structure of the complex is given below. The active material, the metal atom, and the oxygen atom together form the complex. In this complex, the atoms are arranged in an ordered or disordered manner, thereby forming a plurality of crystalline or amorphous regions inside the raw preloading material. As a result, the raw preloading material loaded with the metal atom becomes an amorphous or polycrystalline material. The resulting material comprising the formation A-Me-O is not reactive in ambient atmosphere.

The material of the present disclosure has dramatically improved Coulombic efficiency because the metal atoms with which the active material is preloaded hold and inactivate the oxygen atoms.

### <Method of Manufacturing Material for Use in Battery>

The method of manufacturing a material for use in a battery according to the present disclosure comprises: preloading an active material with one or more metal atoms, wherein the active material is configured to undergo a chemical reaction during charging and/or discharging of the battery, and wherein the metal atom is configured to hold one or more oxygen atoms on a surface of the active material and to inactivate one or more oxygen atoms on a surface of the active material.

To take a metalloid (M)-based material for example, the material is preloaded with a small amount of metal atoms (A) selected from Na, K, Rb, Cs, Ca, Al, Mg, Sr, Sc, Y, Zr, Ti, La, Ce, and Hf. The metal atoms (A) can react with oxygen (O) on the surface of the metalloid (Me)-based material and form, with the metalloid (Me), the complex A-Me-O (i.e., an oxidation state). Since the metal atoms inactivate oxygen, the influence of oxygen is reduced, and the problem of low Coulombic efficiency is solved. Therefore, the metalloid-based material, when used in batteries, exhibits improved electrochemical properties.

In some embodiments, the active material is preloaded with metal atoms by annealing the active material and a material containing the metal atoms in at least one atmosphere selected from helium, nitrogen, and argon, and at an annealing temperature of 500 °C to 1200 °C. The material containing the metal atoms is a metal salt or a metal oxide. The metal salt can be carbonate, nitrate, acetate, or sulfate. The annealing temperature is preferably 800 °C to 1150 °C, and more preferably 1000 °C to 1100 °C. As the inventors have discovered, Coulombic efficiency of the battery is improved when the annealing temperature is increased.

In other embodiments, the active material is preloaded with metal atoms by subjecting the active material and a material containing the metal atoms to ball milling or high-energy ball milling to mix the active material and the material containing the metal atoms, and subjecting the active material and the material containing the metal atoms to heat treatment in at least one atmosphere selected from helium, nitrogen, and argon. The material containing the metal atoms is a metal salt or a metal oxide. The metal salt can be carbonate, nitrate, acetate, or sulfate. The heat treatment can be carried out at a temperature of 500 °C to 1200 °C, preferably 800 °C to 1150 °C, and more preferably 1000 °C to 1100 °C. As the inventors have discovered, Coulombic efficiency of the battery is improved when the heat treatment is carried out at a higher temperature.

### <Battery and Preparation Method Thereof>

The material of the present disclosure can be used in a battery. The battery includes, but is not limited to, a lithium-ion battery, a sodium-ion battery, a potassium-ion battery, a calcium-ion battery, a magnesium-ion battery, or a lithium-sulfur battery. Preferably, the material of the present disclosure is used as an anode material in a battery.

In some embodiments, there is an exemplary battery structure having an anode formed of the material of the present disclosure, a cathode, and an electrolyte ionically connected to the anode and the cathode through which ions can move during charging and discharging cycles. The battery of the present disclosure can comprise a cathode, an anode formed of the material of the present disclosure, and an electrolyte in ionic communication with the anode and the cathode. In some embodiments, the metal ions of the cathode are transferred to the anode during charging of the battery, and the metal ions are transferred back to the cathode during discharging of the battery. During discharging of the battery, the metal ions are not captured by the oxygen atoms in the anode.

Optionally, the battery can comprise a separator. The separator is provided to electrically insulate the cathode from the anode. The cathode is suitable for releasing metal ions, such as lithium, sodium, potassium, calcium and magnesium ions. The anode, on the other hand, receives the metal ions from the cathode.

During each "charging" cycle of the battery, metal ions (for example, lithium, sodium, potassium, calcium and magnesium ions) are transferred from the cathode to the anode. Subsequently, during the "discharging" phase, the metal ions present in the anode are transferred back to the cathode.

Advantageously, the metal atoms with which the material of the present disclosure (as the anode) is preloaded play an important role during the discharging of metal ions. Since the oxygen atoms in the anode combine with the metal atoms, metal ions are not captured by the oxygen atoms in the anode during discharging of the battery and suppress the dissolution of the active material into the electrolyte.

The battery can be manufactured using conventional methods. The material of the present disclosure, conductive carbon black, and sodium carboxymethyl cellulose are mixed with a proper amount of deionized water as the solvent, and the mixture is homogenized, resulting in a slurry. A copper foil is evenly coated with the slurry with the aid of a scraper, vacuum dried, and punched by a die to give a circular electrode plate. A battery is formed by assembling the circular electrode sheet and a lithium plate.

The preparation method and material of the present disclosure were tested by examples, and a description of the examples is given below. The methods of experimentation employed in the Examples and Comparative Examples are conventional ones unless otherwise specified. The materials and reagents, among others, employed in the Examples and Comparative Examples are commercially available unless otherwise specified.
The testing method is described below:

Scanning electron microscopy (SEM) was performed by a scanning electron microscope (Philips XL30FEG) to examine the morphology of the powders.

X-ray diffraction (XRD) was performed by an X-ray diffractometer (D2 Phaser Brucker) at a scanning rate of 0.05 °/s within the range of 10° to 80°, using CuKα radiation (λ= 0.154178 nm) as the X-ray source.

Electrical performance of the materials obtained from Examples and Comparative Examples was tested. A material obtained from an Example or Comparative Example, conductive carbon black (Acetylene Black), and sodium carboxymethyl cellulose were mixed at a mass ratio of 8: 1: 1. After an appropriate amount of deionized water was added as the solvent, the mixture was homogenized in an agate mortar to give a slurry. A copper foil is evenly coated with the slurry with the aid of a scraper, vacuum dried at 80 °C for 4 h, and punched by a die to give a circular electrode plate having a diameter of 16 mm. A button cell battery 2032 was formed by assembling the circular electrode plate as the research electrode and a lithium plate in a glove box.

The electrochemical testing was carried out in a Xin Wei battery testing system. The charging and discharging current density was 250 mA/g, the cut-off voltage for discharging and charging was 0.01-1 V, and the testing temperature was 25 °C.

### Example 1

Place 67 g of magnesium particles and 33 g of silicon particles into a furnace, draw air out of the furnace until the pressure in it reached 0.01% of one standard atmosphere, and fill the furnace with argon having a purity of 99.99% as the inert protective atmosphere.

Heat the magnesium particles and the silicon particles to a temperature of 1100 °C, keep them at 1100 °C for a period of 2 h, take out the magnesium-silicon alloy after it was naturally cooled, and pulverize the magnesium-silicon alloy.

Place the pulverized magnesium-silicon alloy into a vacuum furnace, draw air out of the furnace until the pressure in it reached 0.001% of one standard atmosphere, raise the temperature of the furnace to 800 °C, and distill the pulverized alloy under vacuum for dealloying, resulting in a porous silicon material.

Place 10 g of the porous silicon material in a 50 ml zirconia ball-milling tank, add 60 g of zirconia balls having a diameter of 1 cm, and grind the material at a rotational speed of 400 rpm for a period of 1.5 h, giving porous silicon particles having a particle size of 1 µm to 5 µm. Fig. 1 is a SEM image of the porous silicon particles. As can be seen from Fig. 1, the porous silicon particles are irregular polygonal, have a particle diameter of 1 µm to 5 µm, and comprise a tiny fraction of nanoparticles. Because of its porous morphology, the porous silicon material had reduced mechanical strength, so low-energy ball milling could pulverize it into a powder consisting of particles having a uniform particle size. Fig. 2 is a diagram showing the pore size distribution of the porous silicon particles. The same method as above was employed to obtain porous silicon particles of the other Examples and Comparative Examples, and those porous silicon particles were the same as the porous silicon particles of Example 1 in property.

Place 0.4 g of calcium oxide, 0.4 g of potassium oxide, and 1 g of zirconia to the ball-milling tank, and carry out ball milling under an argon atmosphere, resulting in a composite material.

Heat the composite material to a temperature of 1100 °C under an argon atmosphere, and keep the material at 1100 °C for 3 h, resulting in a material for use in a battery. Table 1 shows the electrical properties of the resulting material.

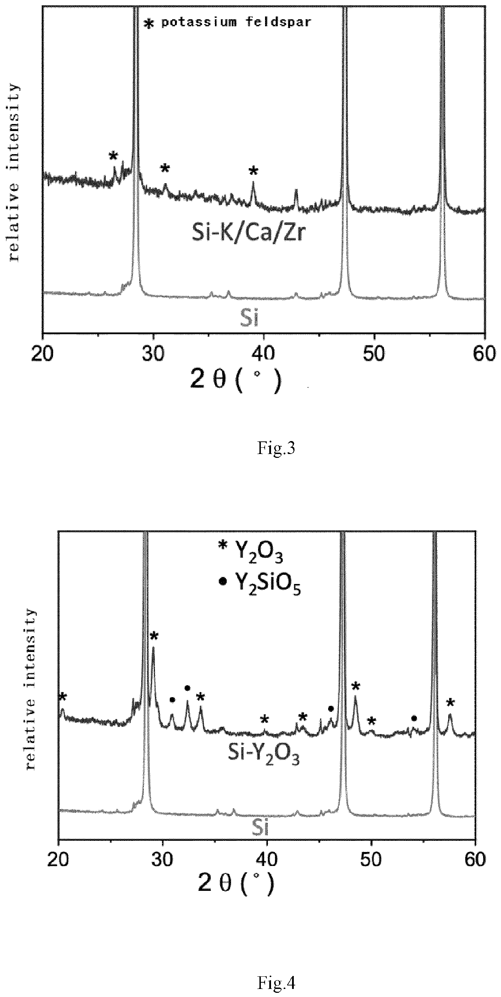

Fig. 3 is an X-ray diffraction pattern of the material for use in a battery that was obtained from Example 1. The occurrence, in Fig. 3, of peaks of a compound formed by the metal atom A and the naive oxide layer on the elemental silicon particles (porous silicon particles) indicates a solid-state chemical reaction happened between the metal atom and the silicon oxide layer. This is proof that an A-Si-O porous silicon composite material was successfully prepared.

### Example 2

Place 67 g of magnesium particles and 33 g of silicon particles into a furnace, draw air out of the furnace until the pressure in it reached 0.01% of one standard atmosphere, and fill the furnace with argon having a purity of 99.99% as the inert protective atmosphere.

Heat the magnesium particles and the silicon particles to a temperature of 1100 °C, keep them at 1100 °C for a period of 2 h, take out the magnesium-silicon alloy after it was naturally cooled, and pulverize the magnesium-silicon alloy.

Place the pulverized magnesium-silicon alloy into a vacuum furnace, draw air out of the furnace until the pressure in it reached 0.001% of one standard atmosphere, raise the temperature of the furnace to 800 °C, and distill the pulverized alloy under vacuum for dealloying, resulting in a porous silicon material.

Place 10 g of the porous silicon material in a 50 ml zirconia ball-milling tank, add 60 g of zirconia balls having a diameter of 1 cm, and grind the material at a rotational speed of 400 rpm for a period of 1.5 h, giving porous silicon particles having a particle size of 1 µm to 5 µm.

Place 1 g of yttrium oxide to the ball-milling tank, and carry out ball milling under an argon atmosphere, resulting in a composite material.

Heat the composite material to a temperature of 1100 °C under an argon atmosphere, and keep the material at 1100 °C for 3 h, resulting in a material for use in a battery. Table 1 shows the electrical properties of the resulting material.

Fig. 4 is an X-ray diffraction pattern of the material for use in a battery that was obtained from Example 2. The occurrence, in Fig. 4, of peaks of a compound formed by the metal atom A and the naive oxide layer on the elemental silicon particles indicates a solid-state chemical reaction happened between the metal atom and the silicon oxide layer. This is proof that an A-Si-O porous silicon composite material was successfully prepared.

### Example 3

Place 67 g of magnesium particles and 33 g of silicon particles into a furnace, draw air out of the furnace until the pressure in it reached 0.01% of one standard atmosphere, and fill the furnace with argon having a purity of 99.99% as the inert protective atmosphere.

Heat the magnesium particles and the silicon particles to a temperature of 1100 °C, keep them at 1100 °C for a period of 2 h, take out the magnesium-silicon alloy after it was naturally cooled, and pulverize the magnesium-silicon alloy.

Place the pulverized magnesium-silicon alloy into a vacuum furnace, draw air out of the furnace until the pressure in it reached 0.001% of one standard atmosphere, raise the temperature of the furnace to 800 °C, and distill the pulverized alloy under vacuum for dealloying, resulting in a porous silicon material.

Place 10 g of the porous silicon material in a 50 ml zirconia ball-milling tank, add 60 g of zirconia balls having a diameter of 1 cm, and grind the material at a rotational speed of 400 rpm for a period of 1.5 h, giving porous silicon particles having a particle size of 1 µm to 5 µm.

Place 0.5 g of alumina and 0.5 g of potassium oxide to the ball-milling tank, and carry out ball milling under an argon atmosphere, resulting in a composite material.

Heat the composite material to a temperature of 1100 °C under an argon atmosphere, and keep the material at 1100 °C for 3 h, resulting in a material for use in a battery. Table 1 shows the electrical properties of the resulting material.

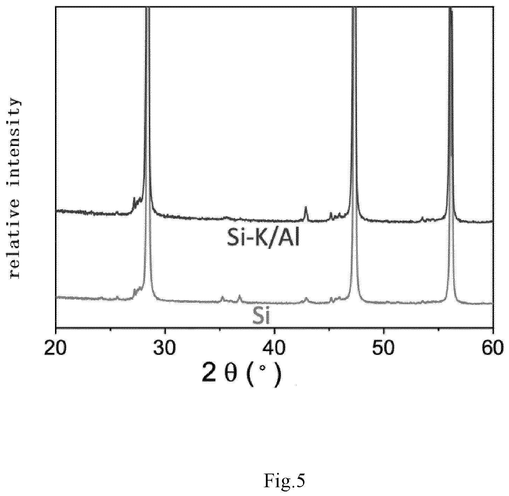

Fig. 5 is an X-ray diffraction pattern of the material for use in a battery that was obtained from Example 3. The occurrence, in Fig. 5, of peaks of a compound formed by the metal atom A and the naive oxide layer on the elemental silicon particles indicates a solid-state chemical reaction happened between the metal atom and the silicon oxide layer. This is proof that an A-Si-O porous silicon composite material was successfully prepared.

### Comparative Example 1

Place 10 g of a nano-sized silicon material (having a diameter of approximately 100 nm) in a 50 ml zirconia ball-milling tank, add 60 g of zirconia balls having a diameter of 1 cm, add 1 g of yttrium oxide to the ball-milling tank, and carry out ball milling at a rotational speed of 400 rpm for a period of 1.5 h under an argon atmosphere, resulting in a composite material.

Heat the composite material to a temperature of 1100 °C under an argon atmosphere, and keep the material at 1100 °C for 3 h, resulting in a material for use in a battery. Table 1 shows the electrical properties of the resulting material.

### Comparative Example 2

Place 67 g of magnesium particles and 33 g of silicon particles into a furnace, draw air out of the furnace until the pressure in it reached 0.01% of one standard atmosphere, and fill the furnace with argon having a purity of 99.99% as the inert protective atmosphere.

Heat the magnesium particles and the silicon particles to a temperature of 1100 °C, keep them at 1100 °C for a period of 2 h, take out the magnesium-silicon alloy after it was naturally cooled, and pulverize the magnesium-silicon alloy.

Place the pulverized magnesium-silicon alloy into a vacuum furnace, draw air out of the furnace until the pressure in it reached 0.001% of one standard atmosphere, raise the temperature of the furnace to 800 °C, and distill the pulverized alloy under vacuum for dealloying, resulting in a porous silicon material.

Place 10 g of the porous silicon material in a 50 ml zirconia ball-milling tank, add 60 g of zirconia balls having a diameter of 1 cm, and grind the material at a rotational speed of 400 rpm for a period of 1.5 h, giving porous silicon particles having a particle size of 1 µm to 5 µm. Table 1 shows the electrical properties of the resulting porous silicon particles.

**Table 1**

| Ex. No. | First charging capacity (mAh·g⁻¹) | First discharging capacity (mAh·g⁻¹) | First Coulombic efficiency (%) |
|---|---|---|---|
| Example 1 | 2711 | 2649 | 91.08 |
| Example 2 | 2827 | 2628 | 92.95 |
| Example 3 | 2759 | 2568 | 93.09 |
| Comp. Example 1 | 2645 | 2050 | 77.50 |
| Comp. Example 2 | 2857 | 2546 | 89.13 |

As can be found out through a comparison between Examples 1-3 and Comparative Example 2, preloading the porous silicon particles with metal atoms can increase the first Coulombic efficiency by about 2% or even about 4%. Such an increment is considerable in the art, indicating that it would not be easy for a person skilled in the art to think of using, as an anode material, an active material preloaded with metal ions. As can be seen from a comparison between Example 2 and Comparative Example 1, using micron-sized porous silicon particles instead of a nano-sized silicon material helps to greatly improve the first Coulombic efficiency, and helps to improve the first charging capacity and the first discharging capacity. In view of these excellent technical effects, substituting micron-sized porous silicon particles for a nano-sized silicon material is by no means a conventional choice in the art. As shown in Table 1, the battery using the material of the present disclosure as the anode has high Coulombic efficiency and capacity, meaning that it is excellent in electrochemical performance.

## Claims

1. A material for use in a battery, comprising:
an active material configured to undergo a chemical reaction during charging and/or discharging of the battery; and
one or more metal atoms configured to hold one or more oxygen atoms of the active material and to inactivate one or more oxygen atoms of the active material during charging and/or discharging of the battery.

2. The material according to claim 1, wherein the metal atom and the active material form a complex.

3. The material according to claim 2, wherein the metal atom is configured to be bound, inside the complex, with an oxygen atom on a surface of the active material.

4. The material according to claim 3, wherein the metal atom is bound with the oxygen atom on the surface of the active material by a covalent bond.

5. The material according to claim 4, wherein the metal atom remains bound with the oxygen atom during charging and/or discharging of the battery.

6. The material according to claim 5, wherein the metal atom reacts with the oxygen atom to form an oxide inside the complex.

7. The material according to claim 6, wherein the oxide forms at least one of an amorphous material and a polycrystalline material.

8. The material according to claim 7, wherein Coulombic efficiency of the material is improved by the metal atom holding and inactivating the oxygen atom.

9. The material according to claim 1, wherein the metal atom is selected from one or more of Na, K, Rb, Cs, Ca, Al, Mg, Sr, Sc, Y, Zr, Ti, La, Ce, and Hf atoms.

10. The material according to claim 9, wherein the metal atom is intercalated in the active material and thereby holds and inactivates the oxygen atom.

11. The material according to claim 10, wherein the metal atom is intercalated in the active material in at least one of the following forms: an elemental metal, a metal oxide, a metal hydroxide, a metal acetate, a metal nitrate, a metal sulfate, and a metal carbonate.

12. The material according to claim 1, wherein the active material is selected from one or more of a metalloid, an oxide of a metalloid, a metal, and an oxide of a metal.

13. The material according to claim 12, wherein the metalloid is Si and/or B.

14. The material according to claim 12, wherein the active material is Si and includes at least one of SiOₓ and SiO₂, where 0 < x < 2.

15. The material according to claim 1, wherein the active material is granular and has a particle diameter of 5 nm to 5 mm.

16. The material according to claim 1, wherein the active material is used as an anode material in the battery.

17. A battery, comprising a cathode, an anode formed of the material according to any one of claims 1-16, and an electrolyte in ionic communication with the anode and the cathode.

18. The battery according to claim 17, wherein a metal ion of the cathode is transferred to the anode during charging of the battery, and the metal ion is transferred back to the cathode during discharging of the battery.

19. The battery according to claim 18, wherein the metal ion is not captured by an oxygen atom in the anode during discharging of the battery.

20. The battery according to claim 18, wherein the metal ion is selected from one or more of Li, Na, K, Ca, and Mg ions.

21. A method of manufacturing the material according to any one of claims 1-16, comprising:
preloading an active material with one or more metal atoms, wherein the active material is configured to undergo a chemical reaction during charging and/or discharging of the battery, and wherein the metal atom is configured to hold one or more oxygen atoms on a surface of the active material and to inactivate one or more oxygen atoms on a surface of the active material.

22. The method according to claim 21, wherein preloading the active material with the metal atom comprises:
annealing the active material and a material containing the metal atom in at least one atmosphere selected from helium, nitrogen, and argon, and at an annealing temperature of 500 °C to 1200 °C.

23. The method according to claim 22, wherein Coulombic efficiency of the battery is improved when the annealing temperature is increased.

24. The method according to claim 21, wherein preloading the active material with the metal atom comprises:
subjecting the active material and a material containing the metal atom to high-energy ball milling to mix the active material and the material containing the metal atom, and subjecting the active material and the material containing the metal atom to heat treatment in at least one atmosphere selected from helium, nitrogen, and argon.
